# EUROPEAN PATENT SPECIFICATION

(11) **EP 4 260 017 B1**
(45) Date of publication and mention of the grant of the patent: **02.12.2026**
(21) Application number: 21805602.6
(22) Date of filing: 06.10.2021
(51) Int. Cl.: G01F 1/58, G01F 1/60

(54) **METHOD AND SYSTEM FOR OPERATING AN ELECTROMAGNETIC FLOWMETER FOR IMPROVING MEASUREMENTS DURING FLOW DISTORTION**
VERFAHREN UND SYSTEM ZUM BETREIBEN EINES ELEKTROMAGNETISCHEN DURCHFLUSSMESSERS ZUR VERBESSERUNG VON MESSUNGEN WÄHREND EINER STRÖMUNGSVERZERRUNG
PROCÉDÉ ET SYSTÈME DE FONCTIONNEMENT D'UN DÉBITMÈTRE ÉLECTROMAGNÉTIQUE POUR AMÉLIORER DES MESURES PENDANT UNE DISTORSION D'ÉCOULEMENT

(30) Priority: 14.12.2020 IN 202041054364
(43) Date of publication of application: 18.10.2023
(73) Proprietor: ABB Schweiz AG, 5400 Baden (CH)
(72) Inventor: DASGUPTA, Subhashish, Bangalore, Karnataka 560066 (IN)
(74) Representative: Zimmermann & Partner Patentanwälte mbB
(86) International application number: PCT/IB2021/059163
(87) International publication number: WO 2022/130042

(56) References cited:
- WO-A1-2018/207009
- WO-A1-2020/089765
- WO-A1-2020/126241
- US-A- 5 325 724
- US-A1- 2010 107 776
- US-A1- 2017 322 060

## Description

### FIELD OF THE INVENTION

The present invention relates in general to an electromagnetic (EM) flowmeter, and more particularly relates to the electromagnetic flowmeter that is operated for improving measurements during flow distortion of fluid in a flow pipe.

### BACKGROUND

Electromagnetic (EM) flowmeters are devices used for measuring flowrate of a fluid. The EM flowmeters are applicable for all conductive liquids, such as water, acids, alkalis, slurries, and many others. Generally, the EM are non-invasive and have no moving parts, reducing a risk of breakdowns and frequency of repairs. However, a cause of concern in functioning of electromagnetic flowmeters is in field due to degradation in measurement accuracy due to flow distortion or velocity profile distortion by upstream features (or piping disturbances), such as, but not limited to, bends, valves, elbows, and T-junctions.

Thus, like in many other flow sensors, measurement accuracy of electromagnetic flowmeters could suffer due to the presence of an upstream flow distorting feature like bends. In existing systems, many techniques have been implemented to mitigate errors induced in flowrate readings due to flow distortion effects. For instance, while conditioning flow prior to its entry into flowmeter section, has been a successful method, the method results in pressure drop, calls for changes in the flowmeter cross section and/or usage of additional components. An extreme situation commonly encountered in the field is availability of not more than zero-to-one-time pipe diameter distance from an upstream bend for installing the flowmeter. Reforming the flow by using a flow reformer like a perforated plate at the flowmeter inlet induces high pressure drop and is not a feasible method.

Also, non-invasive methods to overcome flow distortion effects have been tested and implemented. However, these methods involve additional components and call for undesirable changes to hardware of the EM. Multiple electrodes can be used to obtain several sets of readings at various levels within the flowmeter pipe and averaging the readings to overcome flow distortion effects. However, the method exposes the flowmeter to higher chances of leakage and incurs additional hardware requirements with associated higher costs. Extended electrodes can be used to obtain a flow-average reading but are prone to other noise issues like particulate bombardment on the electrode surfaces. WO 2020/089765 A1 describes an electromagnetic flowmeter for measuring flow of fluid flowing in a conduit of the electromagnetic flowmeter. US 5325724 A describes a device to measure the flowrate of a fluid containing electrical charges which flows in a pipe section. US 2017/032060 A1 describes an electromagnetic flowmeter including a measurement pipe, a first coil, a second coil, core members and an electrode.

Consequently, the flow distortion or the velocity profile distortion of the fluid affect accuracy of the flowrate measurement of the fluid. However, measurement of the accurate flowrate may be critical in industrial processes to ensure optimization of such industrial processes and flowrate measurement by the EM flowmeters. Hence, it is required to reduce the flow distortion in the EM flowmeter for reducing adverse impact on industrial processes.

### SUMMARY

The present disclosure provides a method and a system for operating an Electromagnetic (EM) flowmeter for improving measurements during flow distortion of fluid in a flow pipe, in accordance with various embodiments. The distortion in the flow pipe is for instance, is at least upstream or downstream of EM flowmeter such as, bends, T joints and the like. The EM flowmeter includes a pair of coils including a top coil (C1) and a bottom coil (C2) powered by currents for generating electromagnetic fields, and a pair of electrodes for measuring electromotive forces generated by the interaction of electromagnetic and flow fields in the fluid. The EM flowmeter is communicably coupled to a system for measuring signals from the pair of electrodes. In order to improve the measurements during flow distortion of fluid in the flow pipe, the method includes configuring the current in the pair of coils (C1, C2) based on a relation between distance of the flowmeter from a flow distorting feature in the flow pipe and a characteristic length of the flowmeter. Further, the method includes measuring signals due to electromotive forces generated by the interaction of electromagnetic and flow fields based on the configuration of the current in the pair of coils (C1, C2). Based on the measured signals, the method includes estimating a flowrate of the fluid in the flow pipe. When the distance of the flowmeter from the flow distorting feature is of a second predefined times the characteristic length of the flowmeter, the current to the pair of coil is configured for a predefined duration in an alternative repeating first phase and a second phase. In the first phase, the top coil (C1) is biased with half of a first current value and the bottom coil (C2) with three times that of the top coil (C1). In the second phase, the current to the top coil (C1) is deactivated and the bottom coil (C2) is biased with four times that of the first current value

In accordance with the embodiment, the pair of coil (C1, C2) is biased with a first current value, when the distance of the flowmeter from the flow distorting feature is at first predefined times the characteristic length of the flowmeter. In an embodiment, the first predefined times is twice the characteristic length of the flowmeter.

In accordance with the embodiment, when the distance of the flowmeter from the flow distorting feature is of a second predefined times the characteristic length of the flowmeter, the current to the pair of coil is configured for a predefined duration in an alternative repeating first phase and a second phase. In the first phase, the top coil (C1) is biased with half of a first current value and the bottom coil (C2) with three times that of the top coil (C1). In the second phase, the current to the top coil (C1) is deactivated and the bottom coil (C2) is biased with four times that of the first current value.

In accordance with the embodiment, the second predefined times of distance is within the characteristic length of the flowmeter.

In accordance with the embodiment, when the distance of the flowmeter from the flow distorting feature is third predefined times the characteristic length of the flowmeter, the current to the top coil (C1) is deactivated and the bottom coil (C2) is biased with four times of a first current value.

In accordance with the embodiment, the third predefined times of distance is between the characteristic length of the flowmeter and twice the characteristic length of the flowmeter.

An embodiment of the present disclosure discloses the system for operating the EM flowmeter for improving measurements during flow distortion of fluid in a flow pipe. Without limiting the scope of the invention, the system is capable of operating the EM flowmeter such that an accurate and acceptable fluid flow rate data is generated. The system includes at least one flowmeter comprising a pair of coils with a top coil (C1) and a bottom coil (C2) which are exposed to a current for generating electromagnetic fields and a pair of electrodes for measuring electromotive forces generated by the interaction of electromagnetic fields in the fluid. The system includes a current controller for configuring the current to the pair of coils (C1, C2) based on a relation between distance of the flowmeter from a flow distorting feature and characteristic length of the flowmeter. By providing a unique combination of coil powering patterns, based on a relation between distance of the flowmeter from a flow distorting feature and characteristic length of the flowmeter, the system minimizes flow distortion and induced errors. Further, the system includes a processor configured to measure signals from the pair of electrodes due to electromotive forces generated by the interaction of electromagnetic and flow fields based on the configuration of the current in the pair of coils (C1, C2) and estimate a flowrate of the fluid in the flow pipe based on the measured signals.

Another embodiment of the present disclosure discloses an electromagnetic flowmeter for improving measurements during flow distortion for fluid in a flow pipe. The electromagnetic flowmeter comprises a pair of coils comprising a top coil (C1) and a bottom coil (C2) which are exposed to a current received from a system for generating electromagnetic fields and flow field. The current is based on a relation between distance of the flowmeter from a flow distorting and characteristic length of the flowmeter. Further, the electromagnetic flowmeter comprises a pair of electrodes for measuring electromotive forces generated by the interaction of electromagnetic and flow fields in the fluid. The signals due to electromotive forces are generated by the interaction of electromagnetic fields based on the configuration of the current in the pair of coils (C1, C2) for estimating a flowrate of the fluid in the flow pipe.

### BRIEF DESCRIPTION OF THE ACCOMPANYING DRAWINGS

Having thus described example embodiments of the present disclosure in general terms, reference will now be made to the accompanying drawings, which are not necessarily drawn to scale, and wherein:
FIG. 1A illustrates a schematic diagram of an exemplary electromagnetic flowmeter, in accordance with an embodiment of the disclosure;
**FIGS. 1B-1C** illustrate a section of flow pipe with an electromagnetic flowmeter of FIG. 1, near a bend in accordance with an embodiment of the disclosure;
**FIG.2** illustrates a system for operating an electromagnetic flowmeter for improving measurements during flow distortion of fluid in a flow pipe, in accordance with an embodiment of the disclosure;
**FIGS.** 3A-3C illustrate graphical representations for showing coil powering patterns of electromagnetic flowmeter, in accordance with an alternative embodiment of the disclosure; and
FIG. 4 is a flowchart of a method for operating an electromagnetic flowmeter for improving measurements during flow distortion of fluid in a flow pipe, in accordance with an embodiment of the invention.

### DETAILED DISCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatus and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings. Like reference numerals refer to like elements throughout. The use of any term should not be taken to limit the scope of embodiments of the present invention, which is defined by the appended claims.

A method, system and an electromagnetic (EM) flowmeter for operating an electromagnetic flowmeter for improving measurements during flow distortion of fluid in a flow pipe are provided herein in accordance with example embodiments. The method, system and the EM flowmeter disclosed herein provide measures to improve measurements in the EM during flow distortion of fluid though the flow pipe for ensuring generation of accurate flowrate which may be critical for various industrial processes, such as, but not limited to, water treatment plants, oil plants and pharmaceutical industries.

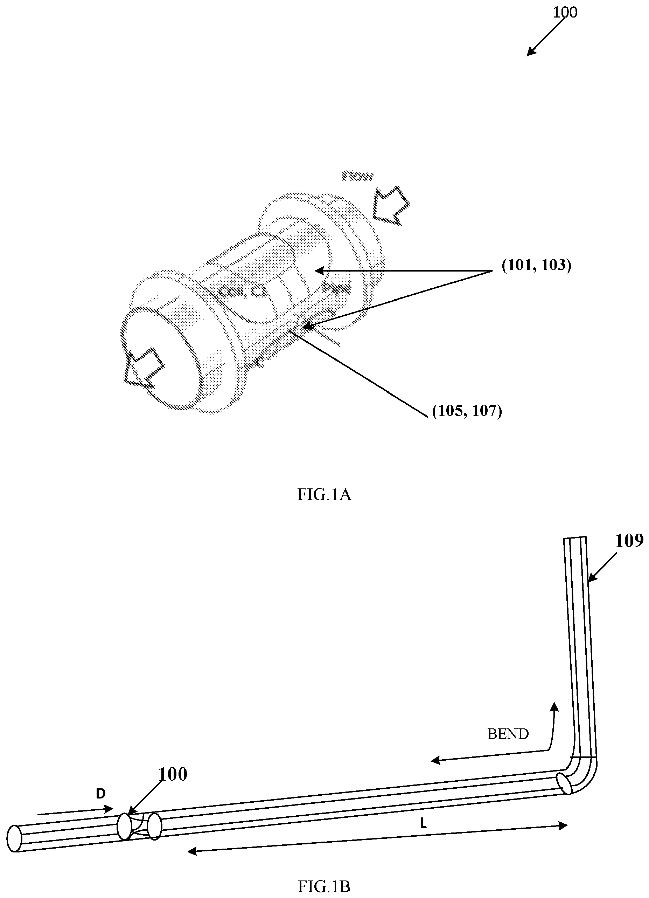

Referring to FIG. 1A, an exemplary electromagnetic (EM) flowmeter 100 suitable for measuring a flow rate of a fluid in a flow pipe is shown. In an embodiment, the EM flowmeter 100 works on Faraday's law of electromagnetic induction. The EM flowmeter 100 comprises a pipe with an insulative liner (not shown in FIG.1A) inside the pipe and in contact with the fluid in the pipe. On either side, the EM flowmeter 100 includes a pair of coils, including a top coil C1 (101) and a bottom coil C2 (103) which are powered by currents for generating electromagnetic fields. Essentially, the generated electromagnetic field interacts with fluid velocity and induces an electromotive force (EMF) within the fluid domain. To measure the EMF, the EM flowmeter 100 includes on either side, a pair of electrodes (105, 107). In an embodiment, the EM flowmeter 100 may comprise a display for indicating the determined flow of fluid in the flow pipe.

Generally, being proportional to velocity or flowrate, the measured EMF can be used to estimate the flowrate, by referring to a calibration factor provided during laboratory testing. The calibration factor is or directly related to a ratio of induced EMF/velocity obtained under ideal laboratory conditions, where enough pipe length upstream of the flowmeter is ensured to avoid flow distortion. However, in fields, there may be situations where an existing EM flowmeter may be near to an upstream or downstream bend and may undergo distortion, resulting in flow measurement error. This is illustrated in FIG.1B, which shows a section of a flow pipe 109 with the electromagnetic flowmeter which is near the upstream bend. In an embodiment, a distance (of the EM flowmeter 100 from the bend is denoted in terms of multiples of its pipe internal diameter (D).

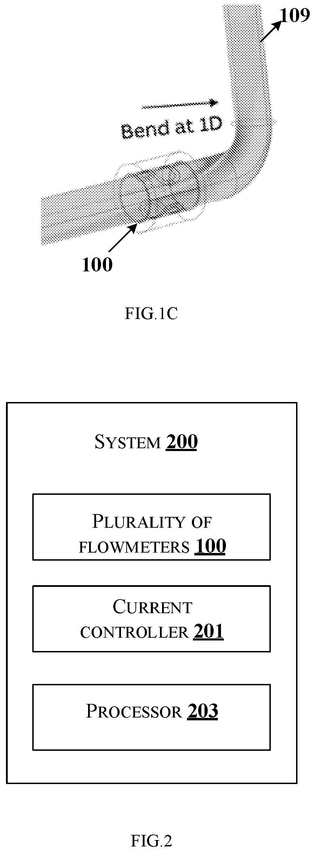

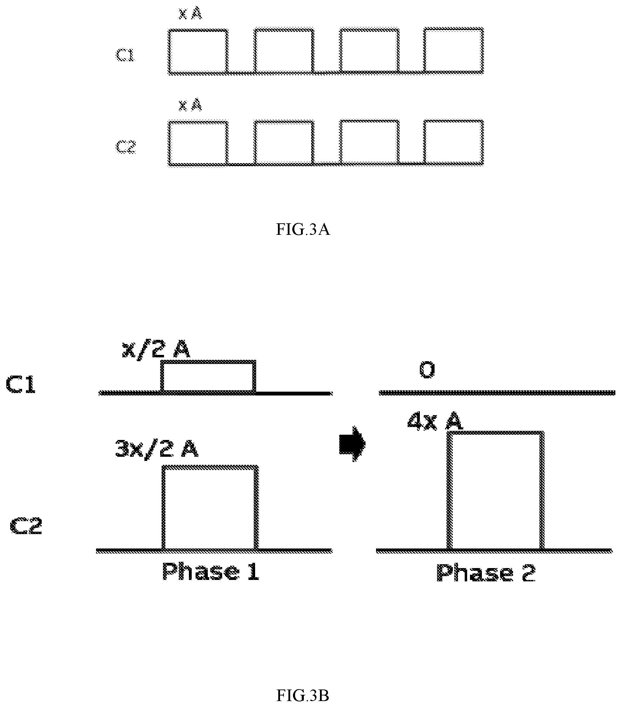

Since a signal obtained from the EM flowmeter 100 depends on a velocity distribution, any flow distortion feature in a velocity profile or distribution leads to error in measurement. The flow distorting feature in the flow pipe 109 is at least upstream or downstream of EM flowmeter 100 at pipe junctions such as, bends, T Joints, and the like. To overcome these flow distorting features, the present disclosure operates the EM flowmeter 100 by facilitating power to the pair of coils (101, 103) based on a unique pattern depending on number of factors. The EM flowmeter 100 is communicatively couped to a system, as shown in FIG.2 for measuring signals from the pair of electrodes and generating the flowrate of the EM flowmeter 100. The system configures the current in the pair of coils (C1, C2) (101, 103) based on a relation between distance of the EM flowmeter 100 from the flow distorting feature in the flow pipe 109 and a characteristic length (L) of the EM flowmeter 100, as shown in FIG.1B. Typically, when the distance of the EM flowmeter 100 from the flow distorting feature is at first predefined times the characteristic length (L) of the EM flowmeter 100, the pair of coils (101, 103) is biased with a first current value, for instance, X amperes. In an embodiment, the first predefined times indicates twice the characteristic length (L) of the EM flowmeter 100. FIG.3A illustrates a graphical representation for the above coil powering scheme the EM flowmeter 100. As shown in FIG.3A, both C1 (101) and C2 (103) are configured with same first current value of X amperes.

Returning to FIG.1A, consider a situation, when the distance of the EM flowmeter 100 from the flow distorting feature is of a second predefined times the characteristic length of the EM flowmeter 100. The second predefined times of distance is within the characteristic length (L) of the EM flowmeter 100. That is, for instance, distance of the EM flowmeter 100 from the bend is "0 to 1" time the diameter of the flow pipe 109 (0D to 1D). In such case, the system configures the current to the pair of coil (101, 103) at a predefined duration, for instance, "t" seconds, in an alternative repeating a first phase and a second phase. For instance, in the first phase, the top coil (C1) (101) is biased with half of the first current value and the bottom coil (C2) (103) with three times that of the top coil (C1). In other words, based on the above representation, the top coil (C1, 101) is at X/2 amperes and the bottom coil (C2, 103) is at 3X/2 amperes in the first phase. After the predefined duration or "t" seconds, the second phase is initiated for "t" seconds, where the the current to the top coil (C1, 101) is deactivated and the bottom coil (C2, 103) is biased with four times that of the first current value.

In other words, the the top coil (C1, 101) is at zero amperes and the bottom coil (C2, 103) is at 4X amperes in the second phase. FIG.3B illustrates a graphical representation for the above coil powering scheme of the EM flowmeter 100. As shown in FIG.3B, the first phase (phase 1) and the second phase (phase 1) are depicted based on the current configuration. Essentially, signals obtained from the first phase and the second phase are averaged for further processing. FIG.1C illustrate a section of flow pipe 109 with an electromagnetic flowmeter with bend at 1D. Likewise, consider another bend situation, when the distance of the EM flowmeter 100 from the flow distorting feature is third predefined times the characteristic length (L) of the EM flowmeter 100.

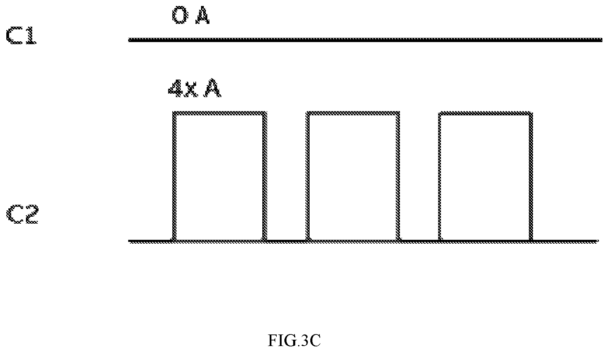

In an embodiment, the third predefined times of distance is between the characteristic length (L) of the EM flowmeter 100 and twice the characteristic length of the EM flowmeter 100. In other words, the distance between the EM flowmeter 100 and the bend is greater than 1D but less than 2D. In such condition, the configuration of current is such that, the current to the top coil (C1, 101) is deactivated and the bottom coil (C2, 103) is biased with four times of the first current value, as exemplarily shown in FIG. 3C. That is, the C1 (101) is at zero amperes while C2 103 is at 4X amperes.

Returning to FIG.1A, once the current is provided to the pair of coils (101, 103) based on any of the above-described configuration, signals due to electromotive forces generated by the interaction of electromagnetic fields and flow field are measured and a flowrate of the fluid in the flow pipe 109 is estimated based on the measured signals. The flowrate of the fluid may be estimated as per known techniques in the art. Thus, by configuring the current to the pair of coils (101, 103), based on the above relations ensure errors associated with distortion are reduced to an acceptable minimum. Also, since the present invention merely requires modification to coil current configuring, the present invention eliminates requirement of additional hardware to the EM flowmeter 100.

FIG.2 shows a block diagram representation of a system 200 for operating an electromagnetic flowmeter for improving measurements during flow distortion for fluid in a flow pipe. The system 200 comprises at least one EM flowmeter 100, as described in FIG.1A, a current controller 201 and a processor 203. The current controller 201 configures the current to the pair of coils (101, 103) of the EM flowmeter 100 based on the relation between distance of the EM flowmeter 100 from the flow distorting feature and characteristic length of the EM flowmeter 100. The current controller 201 includes details about location of each EM flowmeter 100 located in the flow pipe 109. That is, each EM flowmeter 100 is located at specific distance from the flow pipe 109 based on which a bend may be detected and the configuration of current to the pair of coils (101, 103) is varied. Accordingly, depending on the relation determined based on the details of each EM flowmeter 100, the current controller 201 may configure the current to the pair of coils (101, 103).

That is, for instance, when the distance of the EM flowmeter 100 from the bend is "0 to 1" time the diameter of the flow pipe 109 (0D to 1D), in such case, the current controller 201 configures the current to the pair of coil (101, 103) at the predefined duration, in an alternative repeating a first phase and a second phase. The current controller 201 configures the top coil (C1, 101) with X/2 amperes and the bottom coil (C2, 103) with 3X/2 amperes in the first phase. After the predefined duration or "t" seconds, in the second phase, the current controller 201 configures the top coil (C1, 101) with zero amperes and the bottom coil (C2, 103) with 4X amperes. In another bend relation, when the distance between the EM flowmeter 100 and the bend is greater than 1D but less than 2D, in such condition, the current controller 201 configures the top coil (C1, 101) with zero amperes while C2 103 with 4X amperes.

Further, the processor 203 is configured to measure the signals from the pair of electrodes (105, 107) due to the electromotive forces generated by the interaction of electromagnetic fields and the fluid field based on the configuration provided by the current controller 201. Based on the measured signals, the processor 203 estimates the flowrate of the fluid in the flow pipe 109.

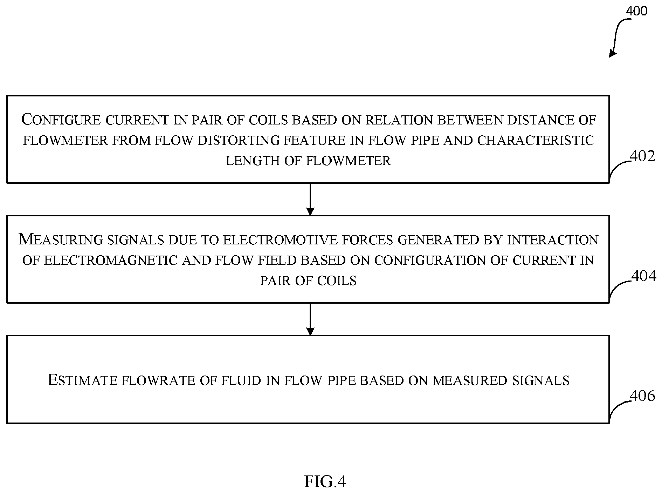

**FIG.4** shows a flowchart of a method for operating an electromagnetic flowmeter for improving measurements during flow distortion of fluid in a flow pipe, in accordance with an embodiment of the invention.

The EM flowmeter 100 is communicatively coupled to the system 200 for operating and improving measurements during flow distortion of fluid in a flow pipe. The steps of the method 400 are performed by the system 200 which may include at least one EM flowmeter 100.

The method 400 comprises a first step 401 of configuring the current in the pair of coils (101, 103) based on the relation between distance of the EM flowmeter 100 from the flow distorting feature in the flow pipe 109 and the characteristic length (L) of the EM flowmeter 100.

Consider, in a first situation, when the distance of the EM flowmeter 100 from the flow distorting feature is at the first predefined times the characteristic length (L) of the EM flowmeter 100, the pair of coils (101, 103) is biased with the first current value, for instance, X amperes. In an embodiment, the first predefined times indicates twice the characteristic length (L) of the EM flowmeter 100.

Considering a second situation, when the distance of the EM flowmeter 100 from the flow distorting feature is of the second predefined times the characteristic length of the EM flowmeter 100. The second predefined times of distance is within the characteristic length (L) of the EM flowmeter 100. That is, for instance, distance of the EM flowmeter 100 from the bend is "0 to 1" time the diameter of the flow pipe 109 (0D to 1D). In such case, the current to the pair of coil (101, 103) is configured at a predefined duration in an alternative repeating a first phase and a second phase. For instance, in the first phase, the top coil (C1) (101) is biased with half of the first current value and the bottom coil (C2) (103) with three times that of the top coil (C1). In other words, based on the above representation, the top coil (C1, 101) is at X/2 amperes and the bottom coil (C2, 103) is at 3X/2 amperes in the first phase. After the predefined duration or "t" seconds, the second phase is initiated for "t" seconds, where the the current to the top coil (C1, 101) is deactivated and the bottom coil (C2, 103) is biased with four times that of the first current value.

Likewise, considering third situation, when the distance of the EM flowmeter 100 from the flow distorting feature is the third predefined times the characteristic length (L) of the EM flowmeter 100.

The third predefined times of distance is between the characteristic length (L) of the EM flowmeter 100 and twice the characteristic length of the EM flowmeter 100. In such condition, the configuration of current is such that, the current to the top coil (C1, 101) is deactivated and the bottom coil (C2, 103) is biased with four times of the first current value. That is, the C1 (101) is at zero amperes while C2 103 is at 4X amperes.

In the next step, at 403, signals due to electromotive forces generated by the interaction of electromagnetic and fluid fields based on the configuration of the current in the pair of coils (101, 103) are measured. When the current in the pair of coils (101, 103) is based on the above second situation, the signals are measured by considering the average of signals of the first phase and the second phase.

In step 405, the flowrate of the fluid in the flow pipe 109 is estimated based on the measured signals. The calculation of the flow rate based on the measured signals may be assumed as per known techniques to the person skilled in the art.

With the configuration of current based on the above relations, the error due to flow distortion are dropped, for instance, nearly 40 times, due to the modification in powering pattern of the pair of coils (101, 103).

An embodiment of the present disclosure provides a low cost, non-invasive technique to ensure flow distortion independence.

An embodiment of the present disclosure ensures reliable and accurate flow sensors which is capable of high performance under extreme conditions.

An embodiment of the present disclosure ensures flow profile independence without inducing pressure drop or additional energy expenditure.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims.

### REFERRAL NUMERALS

| **Reference Number** | **Description** |
|---|---|
| 100 | EM flowmeter |
| 101 | Top coil |
| 103 | Bottom coil |
| 105 | Top electrode |
| 107 | Bottom electrode |
| 109 | Flow pipe |
| 200 | System |
| 201 | Current controller |
| 203 | Processor |

## Claims

1. A method of operating an electromagnetic flowmeter (100) for improving measurements during flow distortion of fluid in a flow pipe (109), the electromagnetic flowmeter (100) comprising a pair of coils including a top coil (C1) (101) and a bottom coil (C2) (103) which are powered by currents for generating electromagnetic fields, and a pair of electrodes (105, 107) for measuring electromotive forces generated by the interaction of electromagnetic and flow fields in the fluid, wherein the electromagnetic flowmeter (100) is communicably coupled to a system (200) for measuring signals from the pair of electrodes (105, 107), the method comprising:
configuring, by the system (200), the current in the pair of coils (C1, C2) (101, 103) based on a relation between distance of the electromagnetic flowmeter (100) from a flow distorting feature in the flow pipe (109) and a characteristic length of the electromagnetic flowmeter (100);
measuring, by the system (200), signals due to electromotive forces generated by the interaction of electromagnetic and flow fields based on the configuration of the current in the pair of coils (C1, C2) (101, 103); and
estimating, by the system (200), a flowrate of the fluid in the flow pipe (200) based on the measured signals;
wherein when the distance of the electromagnetic flowmeter (100) from the flow distorting feature is of a second predefined times the characteristic length of the electromagnetic flowmeter (100), the current to the pair of coil (101, 103) is configured for a predefined duration in an alternative repeating first phase and a second phase, wherein in the first phase, the top coil (C1) (101) is biased with half of a first current value and the bottom coil (C2) (103) with three times that of the top coil (C1) (101), and in the second phase, the current to the top coil (C1) (101) is deactivated and the bottom coil (C2) (103) is biased with four times that of the first current value.

2. The method as claimed in claim 1, wherein the flow distorting feature in the flow pipe (109) is one of upstream or downstream of the electromagnetic flowmeter (100).

3. The method as claimed in claim 1, wherein the pair of coil (C1, C2) (101, 103) is biased with a first current value, when the distance of the electromagnetic flowmeter (100) from the flow distorting feature is at first predefined times the characteristic length of the electromagnetic flowmeter (100).

4. The method as claimed in claim 3, wherein the first predefined times is twice the characteristic length of the electromagnetic flowmeter (100).

5. The method as claimed in claim 1, wherein the second predefined times of distance is within the characteristic length of the electromagnetic flowmeter (100).

6. The method as claimed in claim 1, wherein when the distance of the electromagnetic flowmeter (100) from the flow distorting feature is third predefined times the characteristic length of the electromagnetic flowmeter (100), the current to the top coil (C1) (101) is deactivated and the bottom coil (C2) (103) is biased with four times of a first current value.

7. The method as claimed in claim 6, wherein the third predefined times of distance is between the characteristic length of the electromagnetic flowmeter (100) and twice the characteristic length of the electromagnetic flowmeter (100).

8. A system (200) for operating an electromagnetic flowmeter (100) for improving measurements during flow distortion for fluid in a flow pipe (109), the system (200) comprising:
at least one electromagnetic flowmeter (100) as claimed in claim 9;
a current controller (201) for configuring the current to the pair of coils (C1, C2) (101, 103) based on a relation between distance of the electromagnetic flowmeter (100) from a flow distorting feature and characteristic length of the electromagnetic flowmeter (100); and
a processor (203) configured to measure signals from the pair of electrodes (105, 107) due to electromotive forces generated by the interaction of electromagnetic and flow fields based on the configuration of the current in the pair of coils (C1, C2) (101, 103), and estimate a flowrate of the fluid in the flow pipe (109) based on the measured signals;
wherein when the distance of the electromagnetic flowmeter (100) from the flow distorting feature is of a second predefined times the characteristic length of the electromagnetic flowmeter (100), the current to the pair of coil (101, 103) is configured for a predefined duration in an alternative repeating first phase and a second phase, wherein in the first phase, the top coil (C1) (101) is biased with half of a first current value and the bottom coil (C2) (103) with three times that of the top coil (C1) (101), and in the second phase, the current to the top coil (C1) (101) is deactivated and the bottom coil (C2) (103) is biased with four times that of the first current value.

9. A electromagnetic flowmeter (100) for improving measurements during flow distortion for fluid in a flow pipe (109), the electromagnetic flowmeter (100) comprising:
a pair of coils (101, 103) comprising a top coil (C1) (101) and a bottom coil (C2) (103) which are exposed to a current received from a current controller (201), wherein the current is based on a relation between distance of the electromagnetic flowmeter (100) from a flow distorting feature and characteristic length of the electromagnetic flowmeter (100); and
a pair of electrodes (105, 107) for measuring electromotive forces generated by the interaction of electromagnetic and flow fields in the fluid, wherein signals due to electromotive forces are generated by the interaction of electromagnetic and flow fields based on the configuration of the current in the pair of coils (C1, C2) (101, 103) for estimating by a processor (203) a flowrate of the fluid in the flow pipe (109);
wherein when the distance of the electromagnetic flowmeter (100) from the flow distorting feature is of a second predefined times the characteristic length of the electromagnetic flowmeter (100), the current to the pair of coil (101, 103) is configured for a predefined duration in an alternative repeating first phase and a second phase, wherein in the first phase, the top coil (C1) (101) is biased with half of a first current value and the bottom coil (C2) (103) with three times that of the top coil (C1) (101), and in the second phase, the current to the top coil (C1) (101) is deactivated and the bottom coil (C2) (103) is biased with four times that of the first current value.

## Patentansprüche

1. Verfahren zum Betreiben eines elektromagnetischen Durchflussmessers (100) zum Verbessern von Messungen während einer Strömungsstörung eines Fluids in einem Strömungsrohr (109), wobei der elektromagnetische Durchflussmesser (100) ein Spulenpaar, das eine obere Spule (C1) (101) und eine untere Spule (C2) (103) aufweist, die durch Ströme zum Erzeugen von elektromagnetischen Feldern mit Energie versorgt werden, und ein Elektrodenpaar (105, 107) zum Messen von elektromotorischen Kräfte umfasst, die durch die Interaktion von elektromagnetischen und Strömungsfeldern in dem Fluid erzeugt werden, wobei der elektromagnetische Durchflussmesser (100) kommunikativ mit einem System (200) zum Messen von Signalen von dem Elektrodenpaar (105, 107) gekoppelt ist, wobei das Verfahren umfasst:
Konfigurieren, durch das System (200), des Stroms in dem Spulenpaar (C1, C2) (101, 103) basierend auf einer Beziehung zwischen einem Abstand des elektromagnetischen Durchflussmessers (100) von einem Strömungsstörungsmerkmal in dem Strömungsrohr (109) und einer charakteristischen Länge des elektromagnetischen Durchflussmessers (100);
Messen, durch das System (200), von Signalen aufgrund von elektromotorischen Kräften, die durch die Interaktion von elektromagnetischen und Strömungsfeldern, basierend auf der Konfiguration des Stroms in dem Spulenpaar (C1, C2) (101, 103), erzeugt werden; und
Schätzen, durch das System (200), einer Durchflussrate des Fluids in dem Strömungsrohr (200) basierend auf den gemessenen Signalen;
wobei, wenn der Abstand des elektromagnetischen Durchflussmessers (100) von dem Strömungsstörungsmerkmal ein vordefiniertes Zweifaches der charakteristischen Länge des elektromagnetischen Durchflussmessers (100) beträgt, der Strom zu dem Spulenpaar (101, 103) für eine vordefinierte Dauer in einer ersten Phase und einer zweiten Phase, die sich abwechselnd wiederholen, konfiguriert ist, wobei in der ersten Phase, die obere Spule (C1) (101) mit der Hälfte einer ersten Stromstärke und die untere Spule (C2) (103) mit dem Dreifachen derjenigen der oberen Spule (C1) (101) vorgespannt werden, und wobei in der zweiten Phase der Strom zu der oberen Spule (C1) (101) deaktiviert wird und die untere Spule (C2) (103) mit dem Vierfachen der ersten Stromstärke vorgespannt wird.

2. Verfahren nach Anspruch 1, wobei das Strömungsstörungsmerkmal in dem Strömungsrohr (109) entweder stromaufwärts oder stromabwärts zu dem elektromagnetischen Durchflussmesser (100) vorliegt.

3. Verfahren nach Anspruch 1, wobei das Spulenpaar (C1, C2) (101, 103) mit einer ersten Stromstärke vorgespannt wird, wenn der Abstand des elektromagnetischen Durchflussmessers (100) von dem Strömungsstörungsmerkmal ein erstes vordefiniertes Vielfaches der charakteristischen Länge des elektromagnetischen Durchflussmessers (100) ist.

4. Verfahren nach Anspruch 3, wobei das erste vordefinierte Vielfache das Doppelte der charakteristischen Länge des elektromagnetischen Durchflussmessers (100) ist.

5. Verfahren nach Anspruch 1, wobei das zweite vordefinierte Vielfache eines Abstands innerhalb der charakteristischen Länge des elektromagnetischen Durchflussmessers (100) liegt.

6. Verfahren nach Anspruch 1, wobei, wenn der Abstand des elektromagnetischen Durchflussmessers (100) von dem Strömungsstörungsmerkmal das dritte vordefinierte Vielfache der charakteristischen Länge des elektromagnetischen Durchflussmessers (100) beträgt, der Strom zu der oberen Spule (C1) (101) deaktiviert wird und die untere Spule (C2) (103) mit dem Vierfachen einer ersten Stromstärke vorgespannt wird.

7. Verfahren nach Anspruch 6, wobei das dritte vordefinierte Vielfache des Abstands zwischen der charakteristischen Länge des elektromagnetischen Durchflussmessers (100) und dem Doppelten der charakteristischen Länge des elektromagnetischen Durchflussmessers (100) liegt.

8. System (200) zum Betreiben eines elektromagnetischen Durchflussmessers (100) zum Verbessern von Messungen während einer Strömungsstörung für ein Fluid in einem Strömungsrohr (109), wobei das System (200) umfasst:
mindestens einen elektromagnetischen Durchflussmesser (100) nach Anspruch 9;
eine Stromsteuereinheit (201) zum Konfigurieren des Stroms zu dem Spulenpaar (C1, C2) (101, 103) basierend auf einer Beziehung zwischen einem Abstand des elektromagnetischen Durchflussmessers (100) von einem Strömungsstörungsmerkmal und einer charakteristischen Länge des elektromagnetischen Durchflussmessers (100); und
einen Prozessor (203), der konfiguriert ist zum Messen von Signalen von dem Elektrodenpaar (105, 107) aufgrund von elektromotorischen Kräften, die durch die Interaktion von elektromagnetischen und Strömungsfeldern basierend auf der Konfiguration des Stroms in dem Spulenpaar (C1, C2) (101, 103) erzeugt werden, und zum Schätzen einer Durchflussrate des Fluids in dem Strömungsrohr (109) basierend auf den gemessenen Signalen;
wobei, wenn der Abstand des elektromagnetischen Durchflussmessers (100) von dem Strömungsstörungsmerkmal ein vordefiniertes Zweifaches der charakteristischen Länge des elektromagnetischen Durchflussmessers (100) beträgt, der Strom zu dem Spulenpaar (101, 103) für eine vordefinierte Dauer in einer ersten Phase und einer zweiten Phase, die sich abwechselnd wiederholen, konfiguriert ist, wobei in der ersten Phase, die obere Spule (C1) (101) mit der Hälfte einer ersten Stromstärke und die untere Spule (C2) (103) mit dem Dreifachen derjenigen der oberen Spule (C1) (101) vorgespannt werden, und wobei in der zweiten Phase der Strom zu der oberen Spule (C1) (101) deaktiviert wird und die untere Spule (C2) (103) mit dem Vierfachen der ersten Stromstärke vorgespannt wird.

9. Elektromagnetischer Durchflussmesser (100) zum Verbessern von Messungen während einer Strömungsstörung für ein Fluid in einem Strömungsrohr (109), wobei der elektromagnetische Durchflussmesser (100) umfasst:
ein Spulenpaar (101, 103), das eine obere Spule (C1) (101) und eine untere Spule (C2) (103) umfasst, die einem Strom ausgesetzt sind, der von einer Stromsteuereinheit (201) empfangen wird,
wobei der Strom auf einer Beziehung zwischen
einem Abstand des elektromagnetischen Durchflussmessers (100) von einem Strömungsstörungsmerkmal und einer charakteristischen Länge des elektromagnetischen Durchflussmessers (100) basiert; und
ein Elektrodenpaar (105, 107) zum Messen von elektromotorischen Kräften, die durch die Interaktion von elektromagnetischen und Strömungsfeldern in dem Fluid erzeugt werden, wobei Signale aufgrund der elektromotorischen Kräfte durch die Interaktion von elektromagnetischen und Strömungsfeldern basierend auf der Konfiguration des Stroms in dem Spulenpaar (C1, C2) (101, 103) erzeugt werden, um eine Durchflussrate des Fluids in dem Strömungsrohr (109) durch einen Prozessor (203) zu schätzen;
wobei, wenn der Abstand des elektromagnetischen Durchflussmessers (100) von dem Strömungsstörungsmerkmal ein vordefiniertes Zweifaches der charakteristischen Länge des elektromagnetischen Durchflussmessers (100) beträgt, der Strom zu dem Spulenpaar (101, 103) für eine vordefinierte Dauer in einer ersten Phase und einer zweiten Phase, die sich abwechselnd wiederholen, konfiguriert ist, wobei in der ersten Phase, die obere Spule (C1) (101) mit der Hälfte einer ersten Stromstärke und die untere Spule (C2) (103) mit dem Dreifachen derjenigen der oberen Spule (C1) (101) vorgespannt werden, und wobei in der zweiten Phase der Strom zu der oberen Spule (C1) (101) deaktiviert wird und die untere Spule (C2) (103) mit dem Vierfachen der ersten Stromstärke vorgespannt wird.

## Revendications

1. Procédé permettant de faire fonctionner un débitmètre électromagnétique (100) pour améliorer les mesures pendant une distorsion d'écoulement d'un fluide dans une conduite d'écoulement (109), le débitmètre électromagnétique (100) comprenant une paire de bobines comportant une bobine supérieure (C1) (101) et une bobine inférieure (C2) (103) qui sont alimentées par des courants pour générer des champs électromagnétiques, et une paire d'électrodes (105, 107) pour mesurer les forces électromotrices générées par l'interaction des champs électromagnétiques et du champ d'écoulement dans le fluide, le débitmètre électromagnétique (100) étant couplé en communication avec un système (200) pour mesurer des signaux provenant de la paire d'électrodes (105, 107), le procédé comprenant :
la configuration, par le système (200), du courant dans la paire de bobines (C1, C2) (101, 103) sur la base d'une relation entre une distance du débitmètre électromagnétique (100) par rapport à un élément générateur de distorsion d'écoulement dans la conduite d'écoulement (109) et une longueur caractéristique du débitmètre électromagnétique (100) ;
la mesure, par le système (200), de signaux dus aux forces électromotrices générées par l'interaction des champs électromagnétiques et du champ d'écoulement sur la base de la configuration du courant dans la paire de bobines (C1, C2) (101, 103) ; et
l'estimation, par le système (200), d'un débit du fluide dans la conduite d'écoulement (200) sur la base des signaux mesurés ;
dans lequel, lorsque la distance du débitmètre électromagnétique (100) par rapport à l'élément générateur de distorsion d'écoulement correspond à un deuxième multiple prédéfini de la longueur caractéristique du débitmètre électromagnétique (100), le courant appliqué à la paire de bobines (101, 103) est configuré, pendant une durée prédéfinie, selon une première phase et une deuxième phase répétées en alternance, dans lequel, dans la première phase, la bobine supérieure (C1) (101) est polarisée avec un courant égal à la moitié d'une première valeur de courant et la bobine inférieure (C2) (103) avec un courant égal à trois fois le courant appliqué à la bobine supérieure (C1) (101) et, dans la deuxième phase, le courant appliqué à la bobine supérieure (C1) (101) est désactivé et la bobine inférieure (C2) (103) est polarisée avec un courant égal à quatre fois la première valeur de courant.

2. Procédé selon la revendication 1, dans lequel l'élément générateur de distorsion d'écoulement dans la conduite d'écoulement (109) est situé soit en amont, soit en aval du débitmètre électromagnétique (100).

3. Procédé selon la revendication 1, dans lequel la paire de bobines (C1, C2) (101, 103) est polarisée avec une première valeur de courant, lorsque la distance du débitmètre électromagnétique (100) par rapport à l'élément générateur de distorsion d'écoulement correspond à un premier multiple prédéfini de la longueur caractéristique du débitmètre électromagnétique (100).

4. Procédé selon la revendication 3, dans lequel le premier multiple prédéfini correspond au double de la longueur caractéristique du débitmètre électromagnétique (100).

5. Procédé selon la revendication 1, dans lequel le deuxième multiple prédéfini de la distance est compris dans la longueur caractéristique du débitmètre électromagnétique (100).

6. Procédé selon la revendication 1, dans lequel, lorsque la distance du débitmètre électromagnétique (100) par rapport à l'élément générateur de distorsion d'écoulement correspond à un troisième multiple prédéfini de la longueur caractéristique du débitmètre électromagnétique (100), le courant appliqué à la bobine supérieure (C1) (101) est désactivé et la bobine inférieure (C2) (103) est polarisée avec un courant égal à quatre fois une première valeur de courant.

7. Procédé selon la revendication 6, dans lequel le troisième multiple prédéfini de la distance est compris entre la longueur caractéristique du débitmètre électromagnétique (100) et le double de la longueur caractéristique du débitmètre électromagnétique (100).

8. Système (200) permettant de faire fonctionner un débitmètre électromagnétique (100) pour améliorer les mesures pendant une distorsion d'écoulement d'un fluide dans une conduite d'écoulement (109), le système (200) comprenant :
au moins un débitmètre électromagnétique (100) selon la revendication 9 ;
un contrôleur de courant (201) pour configurer le courant appliqué à la paire de bobines (C1, C2) (101, 103) sur la base d'une relation entre une distance du débitmètre électromagnétique (100) par rapport à un élément générateur de distorsion d'écoulement et une longueur caractéristique du débitmètre électromagnétique (100) ;
et
un processeur (203) configuré pour mesurer des signaux provenant de la paire d'électrodes (105, 107) dus aux forces électromotrices générées par l'interaction des champs électromagnétiques et du champ d'écoulement sur la base de la configuration du courant dans la paire de bobines (C1, C2) (101, 103), et estimer un débit du fluide dans la conduite d'écoulement (109) sur la base des signaux mesurés ;
dans lequel, lorsque la distance du débitmètre électromagnétique (100) par rapport à l'élément générateur de distorsion d'écoulement correspond à un deuxième multiple prédéfini de la longueur caractéristique du débitmètre électromagnétique (100), le courant appliqué à la paire de bobines (101, 103) est configuré, pendant une durée prédéfinie, selon une première phase et une deuxième phase répétées en alternance, dans lequel, dans la première phase, la bobine supérieure (C1) (101) est polarisée avec un courant égal à la moitié d'une première valeur de courant et la bobine inférieure (C2) (103) avec un courant égal à trois fois le courant appliqué à la bobine supérieure (C1) (101) et, dans la deuxième phase, le courant appliqué à la bobine supérieure (C1) (101) est désactivé et la bobine inférieure (C2) (103) est polarisée avec un courant égal à quatre fois la première valeur de courant.

9. Débitmètre électromagnétique (100) pour améliorer les mesures pendant une distorsion d'écoulement d'un fluide dans une conduite d'écoulement (109), le débitmètre électromagnétique (100) comprenant :
une paire de bobines (101, 103) comprenant une bobine supérieure (C1) (101) et une bobine inférieure (C2) (103) qui sont soumises à un courant reçu d'un contrôleur de courant (201),
le courant étant basé sur une relation entre
une distance du débitmètre électromagnétique (100) par rapport à un élément générateur de distorsion d'écoulement et une longueur caractéristique du débitmètre électromagnétique (100) ; et
une paire d'électrodes (105, 107) pour mesurer les forces électromotrices générées par l'interaction des champs électromagnétiques et du champ d'écoulement dans le fluide, des signaux dus aux forces électromotrices étant générés par l'interaction des champs électromagnétiques et du champ d'écoulement sur la base de la configuration du courant dans la paire de bobines (C1, C2) (101, 103) en vue de l'estimation, par un processeur (203), d'un débit du fluide dans la conduite d'écoulement (109) ;
dans lequel, lorsque la distance du débitmètre électromagnétique (100) par rapport à l'élément générateur de distorsion d'écoulement correspond à un deuxième multiple prédéfini de la longueur caractéristique du débitmètre électromagnétique (100), le courant appliqué à la paire de bobines (101, 103) est configuré, pendant une durée prédéfinie, selon une première phase et une deuxième phase répétées en alternance, dans lequel, dans la première phase, la bobine supérieure (C1) (101) est polarisée avec un courant égal à la moitié d'une première valeur de courant et la bobine inférieure (C2) (103) avec un courant égal à trois fois le courant appliqué à la bobine supérieure (C1) (101) et, dans la deuxième phase, le courant appliqué à la bobine supérieure (C1) (101) est désactivé et la bobine inférieure (C2) (103) est polarisée avec un courant égal à quatre fois la première valeur de courant.
